# EUROPÄISCHE PATENTANMELDUNG

(11) **EP 4 113 790 A1**
(43) Veröffentlichungstag der Anmeldung: **04.01.2023**
(21) Anmeldenummer: 22191945.9
(22) Anmeldetag: 13.01.2021
(51) Int. Cl.: H02K 1/04, H01F 41/12, H02K 15/12, H02K 3/38, H02K 5/08

(54) **VERFAHREN ZUM IMPRÄGNIEREN, VERFESTIGEN ODER ELEKTROISOLIEREN EINES EIN- ODER MEHRLAGIGE WICKLUNGEN TRAGENDEN KÖRPERS SOWIE ANLAGE ZUR DURCHFÜHRUNG DAZU**

(30) Priorität: 25.02.2020 EP 20159310
(62) Teilanmeldung aus: 21701911.6
(71) Anmelder: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Plochmann, Bastian, 91413 Neustadt an der Aisch (DE); Warmuth, Matthias, 97618 Windshausen (DE)

(57) **Zusammenfassung**

Die Erfindung betrifft ein Verfahren zum Imprägnieren, Verfestigen oder Elektroisolieren eines ein- oder mehrlagige Wicklungen tragenden Körpers (7), insbesondere für eine elektrische Maschine (12), wobei der die Wicklungen tragende Körper in ein mehrkomponentiges Harzsystem (10) getaucht wird oder mit dem mehrkomponentigen Harzsystem beträufelt wird oder mit dem mehrkomponentigen Harzsystem besprüht wird. Die Erfindung betrifft ferner eine Anlage zur Durchführung des Verfahrens, eine elektrische Maschine (12), insbesondere ein Motor, Generator oder Transformator, imprägniert, verfestigt oder elektroisoliert nach einem derartigen Verfahren sowie eine Verwendung eines mehrkomponentigen Harzsystems (10) zur Imprägnierung, Verfestigung oder Elektroisolierung einer elektrischen Maschine (12).

## Beschreibung

Die Erfindung betrifft ein Verfahren zum Imprägnieren, Verf8estigen oder Elektroisolieren eines ein- oder mehrlagige Wicklungen tragenden Körpers sowie eine Anlage zur Durchführung des Verfahrens.

Die DE 10 2013 017 299 A1 betrifft ein Verfahren zum Imprägnieren, Verfestigen oder Elektroisolieren eines ein- oder mehrlagige Wicklungen tragenden Körpers, insbesondere für einen elektrischen Motor/Generator oder Transformator, wobei der die Wicklungen tragende Körper unter Temperatureinfluss in ein Harz oder einen Lack getaucht oder mit Harz oder mit Lack beträufelt wird, wobei vor und/oder während und/oder nach dem Tränken oder Träufeln der Körper und/oder die von diesem getragenen Wicklungen in einem lokal begrenzten Raumbereich induktiv erwärmt wird.

Eine Herstellung elektrischer Maschinen, beispielsweise Motoren, gelingt meist mit mehreren Fertigungsschritten. Ein Stator wird z. B. nach einem Einziehen von Wicklungen und einem Einbringen von Phasentrennern, Nutisolation und Nutverschluss einem Imprägnierverfahren unterzogen, welches herkömmlicherweise mittels eines heißhärtenden Imprägnierharzes bewerkstelligt wird.

Insbesondere im Bereich kleinerer Motoren wird häufig ein Imprägnierverfahren angewendet, bei welchem der Motor durch ein Harz aufweisendes Becken, auch Harzbecken genannt, gezogen wird. Kleinere Motoren sind hierbei beispielsweise Motoren mit einer Achshöhe 63 bis hin zu einer Achshöhe 160, wobei die Achshöhe das Maß vom Motorstandfuß bis zur Mitte einer Rotationsachse in mm ist.

Ein anschließendes Härten in einem Heißluftofen über mehrere Stunden ist energieintensiv, zeitaufwändig und hat oft Lufteinschlüsse und Fehlstellen im ausgehärteten Harz zur Folge.

Insbesondere größere Motoren - beispielsweise von Achshöhe 180 bis Achshöhe 355 - mit höheren Anforderungen werden mittels eines Verfahrens imprägniert, bei welchem der Stator durch Joulsche Erwärmung vorgeheizt und im Anschluss daran in das Harzbecken getaucht wird. Im eingetauchten Zustand wird der Stator weiterhin durch Strom beheizt, wodurch es zur Gelierung des Harzes in den Nuten und im Wickelkopf kommt. Die Härtung geschieht im Anschluss ebenfalls durch Stromeintrag in die Wicklung und einer oberflächlichen Trocknung mittels UV-Strahlung. Der Stator wird auf min. 150°C aufgeheizt. Im Anschluss kühlt der Stator, der oftmals mehrere hundert Kilogramm schwer ist, aufgrund der hohen Wärmekapazität nur sehr träge in ca. 24 Stunden ab. Eine Weiterarbeit (z.B. Anbringung eines Lagerschildes) ist, insbesondere aufgrund thermischer Ausdehnungskoeffizienten, erst wieder bei Raumtemperatur möglich, wodurch entweder eine aktive Kühlung notwendig ist oder eine Verzögerung unter Nutzung von Lagerfläche aufgrund der Abkühlzeit bei Raumtemperatur in Kauf genommen werden muss.

Die der Erfindung zugrunde liegende Aufgabe kann darin gesehen werden, die Herstellung elektrischer Maschinen zeit- und energieeffizienter zu gestalten.

Die Lösung der Aufgabe gelingt durch Anspruch 1, d. h. ein Verfahren zum Imprägnieren, Verfestigen oder Elektroisolieren eines ein- oder mehrlagige Wicklungen tragenden Körpers, insbesondere für eine elektrische Maschine, wobei der die Wicklungen tragende Körper in ein mehrkomponentiges Harzsystem getaucht wird oder mit dem mehrkomponentigen Harzsystem beträufelt wird oder mit dem mehrkomponentigen Harzsystem besprüht wird.

Im Folgenden wird dieses Verfahren auch in abgekürzter Schreibweise als Imprägnierverfahren bezeichnet.

Die Lösung der Aufgabe gelingt ferner durch Anspruch 12, d. h. eine elektrische Maschine, insbesondere ein Motor, Generator oder Transformator, wird nach dem oben genannten Verfahren imprägniert, verfestigt oder elektroisoliert.

Die Lösung der Aufgabe gelingt ferner durch Anspruch 13, d. h. eine Verwendung eines mehrkomponentigen Harzsystems zur Imprägnierung, Verfestigung oder Elektroisolierung einer elektrischen Maschine.

In einer vorteilhaften Ausführungsform der Erfindung wird der die Wicklungen tragende Körper bei Raumtemperatur in das mehrkomponentige Harzsystem getaucht oder mit dem mehrkomponentigen Harzsystem beträufelt oder mit dem mehrkomponentigen Harzsystem besprüht.

Der Körper ist vorteilhaft ein Motor oder Generator oder ein Transformator. Der Motor/Generator weist vorteilhaft einen Rotor und einen Stator auf.

Der Körper kann auch ein Stator oder ein Rotor sein.

In einer weiteren vorteilhaften Ausführungsform der Erfindung wird der die Wicklungen tragende Körper bei einer Umgebungstemperatur von 15 bis 25°C, insbesondere 20 bis 23°C, in das mehrkomponentige Harzsystem getaucht oder mit dem mehrkomponentigen Harzsystem beträufelt oder mit dem mehrkomponentigen Harzsystem besprüht.

In einer weiteren vorteilhaften Ausführungsform der Erfindung wird der die Wicklungen tragende Körper auf eine Temperatur von 30 bis 80°C, insbesondere 30 bis 60°C, vorgewärmt. Vorzugsweise wird der die Wicklungen tragende Körper auf eine Temperatur von 30 bis 80°C, insbesondere 30 bis 60°C, induktiv vorgewärmt.

Dies hat den Vorteil, dass unterschiedliche Umgebungstemperaturen, z. B. im Sommer oder Winter, keinen Einfluss auf das Imprägnieren, Verfestigen oder Elektroisolieren haben.

Der die Wicklungen tragende Körper weist umgebungstemperaturunabhängig zu Beginn des Verfahrens zur Imprägnierung, Verfestigung oder Elektroisolierung eine definierte Temperatur auf und kühlt dann ab.

In einer weiteren vorteilhaften Ausführungsform der Erfindung weist das mehrkomponentige Harzsystem wenigstens zwei Komponenten auf, wobei eine erste Komponente ein Harz ist, wobei eine zweite Komponente ein Härter ist.

Ein erstes Beispiel: Die erste Komponente, insbesondere ein Harz, weist vorzugsweise eine Viskosität von 2000 bis 2500 mPa·s bei einer Umgebungstemperatur von 25°C auf und eine Dichte von 1,13 bis 1,17 g/ml bei einer Umgebungstemperatur von 20°C. Die zweite Komponente, insbesondere ein Härter, weist vorzugsweise eine Viskosität von 40 bis 60 mPa·s, insbesondere 50 mPa·s, bei einer Umgebungstemperatur von 25°C auf und eine Dichte von 0,98 bis 1,00 g/ml bei einer Umgebungstemperatur von 20°C. Ein Teile-nach-Gewicht-Mischungsverhältnis liegt vorteilhaft bei 100 Teilen Harz zu 20 Teilen Härter. Ein Teile-nach-Volumen-Mischungsverhältnis liegt vorteilhaft bei 100 Teilen Harz zu 23 Teilen Härter. Eine Topfzeit bei Raumtemperatur für 100 g des gemischten Materials liegt vorteilhaft zwischen 20 und 40 min, vorzugsweise 30 min.

Ein zweites Beispiel: Die erste Komponente, insbesondere ein Harz, weist vorzugsweise eine Viskosität von 2400 bis 2600 mPa·s, 2500 mPa·s, bei einer Umgebungstemperatur von 25°C auf und ein spezifisches Gewicht von 1,13 bis 1,17 g/cm³, insbesondere 1,15 g/cm³. Die zweite Komponente, insbesondere ein Härter, weist vorzugsweise eine Viskosität von 200 bis 200 mPa·s, 300 mPa·s, bei einer Umgebungstemperatur von 25°C auf und ein spezifisches Gewicht von 1,00 bis 1,04 g/cm³, insbesondere 1,02 g/cm³. Ein Teile-nach-Gewicht-Mischungsverhältnis liegt vorteilhaft bei 5 Teilen Harz zu 1 Teil Härter. Ein Teile-nach-Volumen-Mischungsverhältnis liegt vorteilhaft bei 4,3 Teilen Harz zu 1 Teil Härter. Das gemischte Material weist vorzugsweise eine Viskosität von 1550 bis 1750 mPa·s, 1650 mPa·s, bei einer Umgebungstemperatur von 25°C auf und ein spezifisches Gewicht von 1,11 bis 1,15 g/cm³, insbesondere 1,13 g/cm³. Eine Gelierzeit bei 25°C liegt vorteilhaft zwischen 25 und 45 min, vorzugsweise 35 min.

Das mehrkomponentige Harzsystem ist vorzugsweise hochreaktiv. Das mehrkomponentige Harzsystem ist vorzugsweise ein 2K-Harzsystem.

Vorzugsweise weist die zweite Komponente eine Viskosität von 40 bis 300 mPa·s bei einer Umgebungstemperatur von 25°C auf.

In einer weiteren vorteilhaften Ausführungsform der Erfindung ist das Harz ein Epoxidharz, wobei der Härter ein Härter auf Aminbasis ist.

Der Amin basierte Härter bringt den Vorteil mit sich, dass die Aushärtung erfolgt bei Zimmertemperatur erfolgen kann, auch Kalthärtung genannt. Epoxidharz ist aufgrund seiner ausgeprägten mechanischen Eigenschaften vorteilhaft und hat nur eine kleine Volumenänderung während des Aushärtens zur Folge. Epoxidharz beinhaltet vorteilhaft keine Lösemittel und weist ein VOC < 1% auf (volatile organic compounds, kurz VOC), d.h. es dampfen weniger als 1 gew.-% des gesamten Materials im Laufe des Härtungsvorgangs ab.

In einer weiteren vorteilhaften Ausführungsform rotiert der Körper um eine Achse, wenn der Körper in ein mehrkomponentiges Harzsystem getaucht wird oder mit dem mehrkomponentigen Harzsystem beträufelt wird oder mit dem mehrkomponentigen Harzsystem besprüht wird.

Vorteilhaft befindet sich der Körper auf einer Rollier-Station.

In einer weiteren vorteilhaften Ausführungsform der Erfindung werden die erste Komponente und die zweite Komponente getrennt voneinander gefördert, wobei die erste Komponente und die zweite Komponente unmittelbar vor dem Tauchen oder vor der Beträufelung oder vor der Besprühung zum mehrkomponentigen Harzsystem vermischt werden.

Unmittelbar bedeutet vorzugsweise: max. 10 min.

Durch die Rotation des Körpers wird ein Abtropfen des Harzsystems, insbesondere des Harzes, verhindert. Durch vorhandene Kapillarkräfte wird das Harz in die Nuten gezogen und geliert dort innerhalb weniger Minuten. Eine Tropffreiheit soll nach max. 20 min erreicht sein. Der Körper kann ohne lange aushärten und/oder abkühlen zu müssen, von der Rollier-Station entnommen werden und weiterbearbeitet werden.

In einer weiteren vorteilhaften Ausführungsform der Erfindung weist das mehrkomponentige Harzsystem eine Viskosität von 300 mPa·s bei 25°C auf.

Diese Viskosität beschreibt eine Anfangsviskosität bei 25°C. Da der Körper auf 30 bis 80°C, insbesondere 30 bis 60°C erwärmt wurde, ist die tatsächliche Viskosität geringer.

Vorteilhaft beim Mischen der ersten und zweiten Komponente ist eine nur geringe Viskositätsdifferenz. Ein dynamisches Mischrohr erlaubt hierbei eine größere Viskositätsdifferenz als ein statisches Mischrohr.

In einer weiteren vorteilhaften Ausführungsform der Erfindung weist das mehrkomponentige Harzsystem nach einer Zeitspanne von 20 bis 30 min nach dem Auftreffen auf den Körper eine Viskosität von 15000 mPa·s auf.

In einer weiteren vorteilhaften Ausführungsform der Erfindung wird das mehrkomponentige Harzsystem zur Beträufelung als Strahl mit einer Dosierung zwischen 0,2 ml/s und 2 ml/s geformt.

Die genannte Dosierung ist vorteilhaft, da dadurch das Harzsystem optimal gefördert werden kann. Die genannte Dosierung ist zudem vorteilhaft, da dadurch das Harzsystem optimal über Kapillarkräfte in die Wicklung gezogen werden kann.

In einer weiteren vorteilhaften Ausführungsform er Erfindung ist das mehrkomponentige Harzsystem bei einer Umgebungstemperatur von 15 bis 25 °C, insbesondere 20 bis 23 °C, nach weniger als 100 h, vorzugsweise weniger als 72 h, zu wenigstens 95%, vorzugsweise wenigstens 97%, ausgehärtet.

Das mehrkomponentige Harzsystem härtet vorzugsweise ohne den aktiven Eintrag von Wärme aus.

Bei Raumtemperatur ist das mehrkomponentige Harzsystem vorzugsweise nach 24 h zu min 97% ausgehärtet.

Die Erfindung bietet den Vorteil, dass eine Weiterarbeit (z.B. Anbringung eines Lagerschildes), welche aufgrund thermischer Ausdehnungskoeffizienten erst bei Raumtemperatur möglich ist, zeitnah nach der Imprägnierung durchgeführt werden kann. Es ist keine aktive Kühlung notwendig. Ferner muss auch keine Verzögerung unter Nutzung von Lagerfläche aufgrund einer Abkühlzeit bei Raumtemperatur in Kauf genommen werden. Eine kosten- und zeiteffiziente Fertigung ist somit möglich.

Zudem entfällt der eingangs erwähnte hohe Energieverbrauch zum Aufheizen der Wicklung mit Strömen von beispielsweise mehr als 500 A. Zur Steuerung dieser Ströme ist zudem eine sehr aufwendige Leistungselektronik in einer Fertigungsanlage erforderlich. Auch dies entfällt durch die Erfindung.

Die Erfindung bietet ferner den Vorteil, dass in einer Fertigungshalle keine Flächen bereitgestellt werden müssen, auf welchen die imprägnierten Körper über oftmals mehrere Tage oder sogar Wochen abkühlen und aushärten. Dies hat positive wirtschaftliche Effekte zur Folge.

Ein weiterer Vorteil der Erfindung ist, dass kein Harz in Harzbecken vorgehalten werden muss, bei welchem immer die Gefahr einer unerwünschten Gelierung besteht.

Es ist ferner denkbar, dass zur Imprägnierung, Verfestigung oder Elektroisolierung ein 3K-Harzsystem eingesetzt wird. Additive zu einer, vorzugsweis zeitverzögerten, Thixotropierung können einen viskositätserhöhenden Effekt im Hinblick auf eine Gelierung beschleunigen. Dies hat eine Steigerung einer Fertigungseffizienz zur Folge, insbesondere im Hinblick auf eine Taktzeit.

Im Folgenden wird die Erfindung anhand der in den Figuren gezeigten Ausführungsbeispiele näher beschrieben und erläutert. Es zeigen:
- FIG 1: das Imprägnierverfahren,
- FIG 2: eine beispielhafte Anlage zur Durchführung des Imprägnierverfahrens und
- FIG 3: eine dynamoelektrische rotatorische Maschine während des Imprägnierverfahrens.

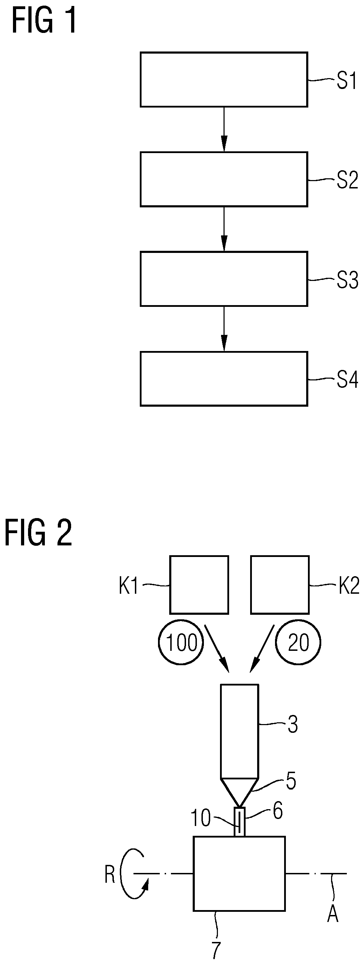

FIG 1 zeigt das Imprägnierverfahren.

In einem ersten Verfahrensschritt werden eine erste Komponente und eine zweite Komponente (Bezugszeichen K1 und K2 in FIG 2) bereitgestellt. Die erste Komponente ist vorzugsweise ein Harz, die zweite Komponente ist vorzugsweise ein Härter.

Die beiden Komponenten werden in einem Verfahrensschritt S2 getrennt gefördert.

In einem Verfahrensschritt S3 werden die beiden Komponenten zu einem mehrkomponentigen Harzsystem (10 in FIG 2), in diesem Fall zweikomponentigen Harzsystem, gemischt und, vorzugsweise unmittelbar nach der Mischung, auf einen Körper (7 in FIG 2) aufgebracht bzw. in den Körper eingebracht.

Es sind auch mehr als zwei Komponenten möglich.

In einem Verfahrensschritt S4 wird durch die Rotation des Körpers das mehrkomponentige Harzsystem in Hohlräumen im Körper verteilt. Ist der Körper beispielsweise ein Stator, wird das mehrkomponentige Harzsystem in den Nuten verteilt.

FIG 2 zeigt eine beispielhafte Anlage zur Durchführung des Imprägnierverfahrens.

Die erste Komponente K1 und die zweite Komponente K2 werden im beispielhaft angegebenen Mischverhältnis 100:20 in einem Mischrohr 3 zum mehrkomponentigen Harzsystem 10 vermischt und als Strahl 6 durch eine Düse 5 auf den Körper 7 ausgegeben. Der Körper rotiert in Rotationsrichtung R um eine Achse A.

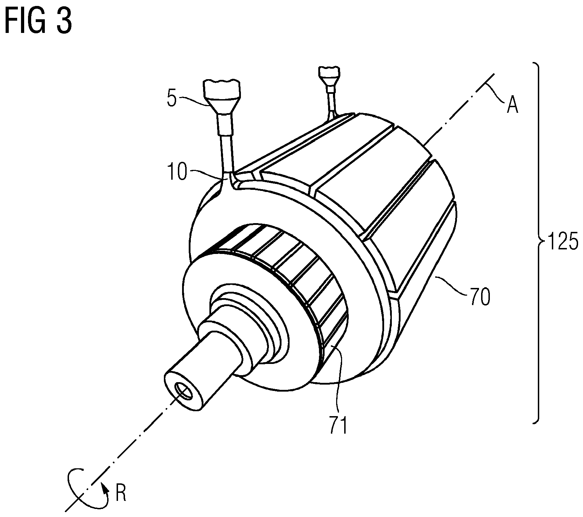

FIG 3 zeigt eine dynamoelektrische rotatorische Maschine 12 während des Imprägnierverfahrens. Die Figur zeigt einen Stator 70 und einen Rotor 71. Durch die Düse 5 trifft das mehrkomponentige Harzsystem 10 in der Figur auf den Stator 70, während der Stator 70 in Rotationsrichtung R um die Achse A rotiert.

Während weiterer Fertigungsschritte sind Rotor und/oder Stator meist erhöhter Temperaturen ausgesetzt. Es folgen z. B. ca. 80°C Wicklungstemperatur beim Aufschrumpfen des 200°C heißen Alu-Gehäuses und eine Kurzschlussprüfung als Endprüfung mit einer frei wählbaren Aufheizung der Wicklung. Eine nahezu 100%ige Härtung des Harzsystems, sofern chemisch überhaupt möglich, ist vor der Fertigstellung gesichert.

Ohne thermische Folgeprozesse ist die Härtung des Harzsystems innerhalb weniger Tage abgeschlossen. Ein Fertigungsfluss wird nicht gestört, da es sich bereits nach wenigen Minuten um ein tropffreies Produkt handelt, welches keine oder einer nur eine geringe Klebrigkeit der Oberfläche aufweist.

Das Imprägnierverfahren bietet viele Vorteile: Eine deutliche Reduktion der Energiekosten, abhängig von Material und Fertigungsfluss kann eine Zykluszeit reduziert werden. Durch den Wegfall der thermischen Prozesse kann die Anlagengröße und benötigte Fläche halbiert werden.

## Patentansprüche

1. Verfahren zum Imprägnieren, Verfestigen oder Elektroisolieren eines ein- oder mehrlagige Wicklungen tragenden Körpers (7), insbesondere für eine elektrische Maschine (12), wobei der die Wicklungen tragende Körper in ein mehrkomponentiges Harzsystem (10) getaucht wird oder mit dem mehrkomponentigen Harzsystem beträufelt wird oder mit dem mehrkomponentigen Harzsystem besprüht wird,
wobei der die Wicklungen tragende Körper (7) bei einer Umgebungstemperatur von 15 bis 25°C, insbesondere 20 bis 23°C, in das mehrkomponentige Harzsystem (10) getaucht oder mit dem mehrkomponentigen Harzsystem beträufelt oder mit dem mehrkomponentigen Harzsystem besprüht wird,
wobei das mehrkomponentige Harzsystem (10) wenigstens zwei Komponenten aufweist, wobei eine erste Komponente (K1) ein Harz ist, wobei eine zweite Komponente (K2) ein Härter ist.

2. Verfahren nach Anspruch 1, wobei der die Wicklungen tragende Körper (7) auf eine Temperatur von 30 bis 80°C vorgewärmt wird, vorzugsweise induktiv vorgewärmt wird.

3. Verfahren nach einem der vorhergehenden Ansprüche, wobei das Harz ein Epoxidharz ist, wobei der Härter ein Härter auf Aminbasis ist.

4. Verfahren nach einem der vorhergehenden Ansprüche, wobei der Körper (7) um eine Achse (A) rotiert, wenn der Körper in ein mehrkomponentiges Harzsystem (10) getaucht wird oder mit dem mehrkomponentigen Harzsystem beträufelt wird oder mit dem mehrkomponentigen Harzsystem besprüht wird.

5. Verfahren nach einem der vorhergehenden Ansprüche, wobei die erste Komponente (K1) und die zweite Komponente (K2) getrennt voneinander gefördert werden, wobei die erste Komponente und die zweite Komponente unmittelbar vor dem Tauchen oder vor der Beträufelung oder vor der Besprühung zum mehrkomponentigen Harzsystem (10) vermischt werden.

6. Verfahren nach einem der vorhergehenden Ansprüche, wobei das mehrkomponentige Harzsystem (10) eine Viskosität von 300 mPa·s bei 25°C aufweist.

7. Verfahren nach einem der vorhergehenden Ansprüche, wobei das mehrkomponentige Harzsystem (10) nach einer Zeitspanne von 20 bis 30 min nach dem Auftreffen auf den Körper (7) eine Viskosität von 15000 mPa·s aufweist.

8. Verfahren nach einem der vorhergehenden Ansprüche, wobei das mehrkomponentige Harzsystem (10) zur Beträufelung als Strahl (6) mit einer Dosierung zwischen 0,2 ml/s und 2 ml/s geformt wird.

9. Verfahren nach einem der vorhergehenden Ansprüche, wobei das mehrkomponentige Harzsystem (10) bei einer Umgebungstemperatur von 15 bis 25°C, insbesondere 20 bis 23°C, nach weniger als 100 h, vorzugsweise weniger als 72 h, zu wenigstens 95%, vorzugsweise wenigstens 97%, ausgehärtet ist.

10. Elektrische Maschine (12), insbesondere ein Motor, Generator oder Transformator, imprägniert, verfestigt oder elektroisoliert nach einem Verfahren nach einem der vorhergehenden Ansprüche.

11. Verwendung eines mehrkomponentigen Harzsystems (10) zur Imprägnierung, Verfestigung oder Elektroisolierung einer elektrischen Maschine (12).

12. Anlage zur Durchführung des Verfahrens nach einem der Ansprüche 1 bis 9.

13. Anlage nach Anspruch 12 mit einem Mischrohr.

14. Anlage nach Anspruch 13 mit einem statischen Mischrohr.
